# EUROPÄISCHE PATENTSCHRIFT

(11) **EP 0 479 048 B1**
(45) Veröffentlichungstag und Bekanntmachung des Hinweises auf die Patenterteilung: **30.08.1995**
(21) Anmeldenummer: 91115883.0
(22) Anmeldetag: 19.09.1991
(51) Int. Cl.: G03D 17/00, G01N 21/47, G01B 7/34

(54) **Verfahren und Vorrichtung zum Erkennen der Schichtseite von transparenten Bildvorlagen**
Method and device for detecting the layer side of a transparent picture
Méthode et dispositif pour détecter le côté de la couche d'une image transparente

(30) Priorität: 02.10.1990 DE 4031108
(43) Veröffentlichungstag der Anmeldung: 08.04.1992
(73) Patentinhaber: Agfa-Gevaert AG, 51373 Leverkusen (DE)
(72) Erfinder: Jacob,Friedrich Dipl.-Phys., W-8000 München 83 (DE)

(56) Entgegenhaltungen:
- DE-A- 3 420 311
- DE-A- 3 426 503
- US-A- 4 776 212
- US-A- 4 888 983

## Beschreibung

Die Erfindung betrifft ein Verfahren nach dem Oberbegriff des Anspruchs 1 und eine Vorrichtung zur Durchführung dieses Verfahrens.

Bei der Bearbeitung von gerahmten, transparenten Bildvorlagen - insbesondere von unverglast gerahmten Diapositiven - ist darauf zu achten, daß die Schichtseite jeweils richtig im Strahlengang liegt. Liegt nämlich die Schichtseite auf der falschen Seite, ergibt sich bei der Projektion oder beim Kopieren ein seitenverkehrtes Bild. Dies ist beim Projizieren von in Magazinen enthaltenen Diapositiven nicht so schwerwiegend, da ein solches Dia dann entnommen, gedreht und in das Magazin zurückgegeben werden kann.

Bei maschinell gerahmten Diapositiven sind die verschiedenen Seiten des Rähmchens unterschiedlich eingefärbt, so daß die Lage des Diapositivs im Rähmchen durch die Farbflächen erkannt und das Diapositiv entsprechend seitenrichtig in eine Projektions- oder Kopierbühne eingelegt werden kann. Bei von Fotofreunden selbst gerahmten Diapositiven wird diese Regelung mit den Farben nicht so zuverlässig eingehalten oder es kann auch vorkommen, daß ein sogenanntes Service-Rähmchen von dem Fotofreund geöffnet und aus irgendwelchen Gründen das Diapositiv falsch eingelegt wird. Um hier das Entstehen von seitenverkehrten Kopien mit Sicherheit zu vermeiden, müssen nach bisherigem Verfahren die Diapositive durch Betrachten im schräg einfallenden Licht auf die Lage der Schichtseite überprüft werden. Mit zunehmend dünneren Emulsionsschichten wird dieses Verfahren immer schwieriger durchzuführen, insbesondere bei Bildern, die nur geringe, sprunghaft auftretende Dichteunterschiede aufweisen.

Ferner ist aus der DE-OS 36 35 386 ein Verfahren bekanntgeworden, das bei einem von dem Film reflektierten Strahl den Anteil des Streulichtes gegenüber dem spiegelnd reflektierten Licht auf beiden Seiten eines fotografischen Filmes prüft in der Annahme, daß die Schichtseite einen höheren Streulichtanteil aufweist. Dieses Verfahren konnte sich jedoch bisher in der Praxis nicht durchsetzen.

Aufgabe der Erfindung ist es deshalb, ein leicht zu handhabendes, kostengünstiges Verfahren zum Erkennen der Schichtseite zu schaffen.

Diese Aufgabe wird gelöst durch die im Kennzeichen des Anspruchs 1 beschriebenen Merkmale. Die beanspruchte Erfindung geht davon aus, daß in den üblichen Plattenspielern mechanische Abtastsysteme zur Verfügung stehen, die mit geringsten Auflagekräften äußerst feine Strukturen in der Oberfläche unterscheiden und in ihrer Größe analog wiedergeben können. Dies sind vor allem induktive oder kapazitive Systeme, die die mechanischen Abtastbewegungen in Stromimpulse umsetzen. Aufgrund solcher Stromimpulse kann durch vergleichende Bewertung der Stromimpulse von beiderseits des zu untersuchenden Filmes angeordneten Abtastsystemen eine Entscheidung über die Lage der Schichtseite getroffen werden.

Weitere Einzelheiten und Vorteile der Erfindung und eine Vorrichtung zur Durchführung des Verfahrens ergeben sich aus den Unteransprüchen im Zusammenhang mit der Beschreibung eines Ausführungsbeispiels, das anhand einer Figur ausführlich erläutert ist. Die einzige Figur zeigt:
- eine schematische Anordnung zur mechanischen Abtastung von Filmoberflächen.

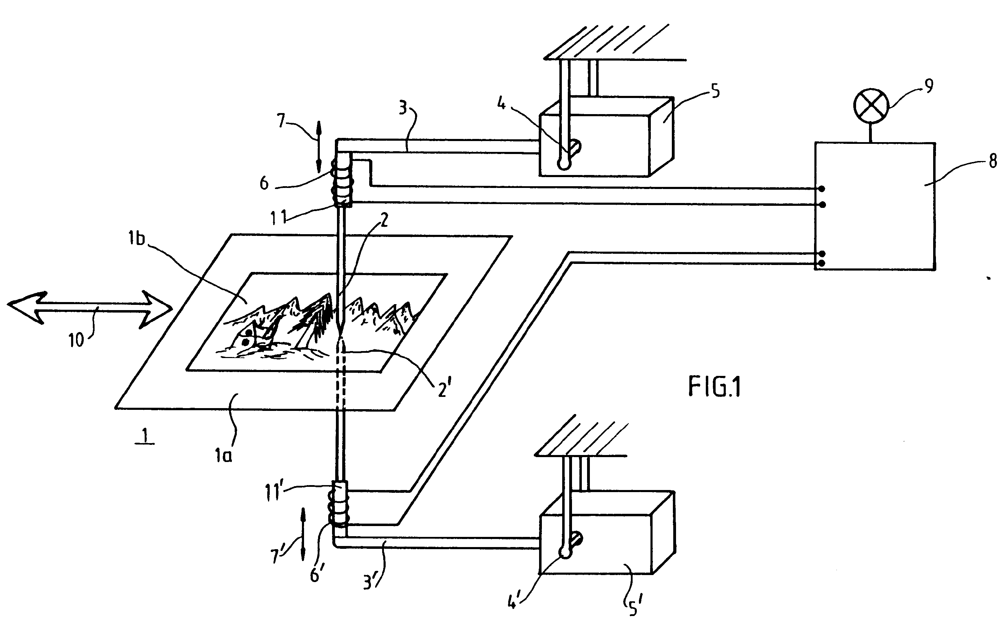

In Fig. 1 ist mit 1 ein übliches fotografisches Diapositiv bezeichnet, das in einem in der Regel aus Kunststoff gespritzten, glaslosen Rahmen 1a festgeklemmt einen Filmabschnitt 1b trägt, auf dem ein fotografisches Bildmotiv in Form einer fotografischen Schicht festgehalten ist. Diese Schicht ist auf einer Seite einer transparenten Unterlage aufgebracht, die auf ihrer anderen Seite zumindest nach der Entwicklung keine Schicht mehr trägt und sehr glatt ist. In der fotografischen Emulsion zeichnen sich nach dem Entwicklungsprozeß in Zuordnung zu den durch das Licht bei der Belichtung ausgelösten Schwärzungen geringfügige Dickenunterschiede ab. Die Filmoberfläche liegt dabei gegenüber dem Rahmen 1a etwas vertieft, so daß sie die bildtragende Oberfläche gegen Verkratzungen schützt. An den beiden Filmseiten liegen, sich gegenüberliegend, zwei Abtastspitzen 2 und 2′ an, deren Aufhängung und Bewegungsauswertung genau übereinstimmen und die deshalb nur anhand von einer dieser Einrichtungen beschrieben wird. Die Abtastnadel 2 hat eine Diamantspitze, die gegenüber einem üblichen Diamantabtaster für akustische Langspielplatten etwas verrundet ist. Die Spitze ist mit einem permanentmagnetischen Kern 11 verbunden, der an einem Tragarm 3 befestigt ist. Dieser Tragarm ist gestellfest in einem Lager 4 reibungsarm gelagert und mit einem Gegengewicht 5, das einstellbar sein kann, so justiert, daß die Auflagekraft der Abtastspitze 5 mN nicht überschreitet.

Um den Magnetkern 11 herum ist eine gerätefeste Spule 6 angeordnet, die mit einer Auswerteschaltung 8 verbunden ist. An dieser ist als Anzeigeelement z. B. eine Lampe 9 angeschlossen. Die Anzeige könnte aber auch rein akustisch erfolgen.

Das Abtastsystem mit der Spitze 2′ ist identisch aufgebaut; gleiche Elemente haben dasselbe Bezugszeichen mit Indexstrich.

Die Wirkungsweise der beschriebenen Einrichtung ist wie folgt:
Zum Einführen eines Diapositivs 1 zwischen die Abtastspitzen 2 und 2′ werden diese durch geeignete, nicht dargestellte, an den Tragarmen 3 angreifende Abhebemittel voneinander entfernt, so daß sie durch den Rahmen 1a während des Einschiebevorgangs in Richtung des Pfeiles 10 nicht beschädigt werden können. Nach Rücknahme der Abhebeeinrichtung von den Armen 3 bzw. 3′ liegen die beiden Abtastspitzen 2, 2′ im bildtragenden Bereich des Filmes an dessen beiden Seiten an, und zwar mit einer Kraft, die höchstens 5 mN beträgt und mit den verwendeten, leicht abgerundeten Tastdiamanten auf dem Film, insbesondere auf dessen Schichtseite, keinerlei Veränderungen hinterläßt. Wird nun der Rahmen 1a mit dem Filmstück 1b in Richtung des Pfeiles 10 zwischen den beiden Abtastspitzen 2, 2′ hindurchbewegt, folgen diese der Oberflächenstruktur der beiden Filmseiten. Die Bewegungen der Abtastspitzen 2, 2′ in Richtung der Pfeile 7, 7′ werden unmittelbar auf die Magnetkerne 11, 11′ übertragen und induzieren in den Spulen 6 bzw. 6′ Stromimpulse, die an die Auswerteschaltung 8 weitergegeben werden. Durch entsprechende Analogverstärkung können sie unmittelbar hörbar gemacht werden, wobei die Bedienperson z. B. zwei getrennte Kopfhörer für die beiden Abtasteinheiten tragen könnte.

Eine weitere Auswertemöglichkeit ist das Abziehen der jeweiligen Stromimpulse voneinander und das Anzeigen des größeren Stromimpulses z. B. auf akustischem Wege oder eine Integration über einen Abtastweg, der wenigstens in der Größenordnung einer Bildabmessung liegen sollte.

Die Stromimpulse werden analog der Abtastung von Tonträgern mit ihrer zeitlichen Ableitung verstärkt, d. h. wiedergegeben werden kurzwellige Höhenunterschiede der Schicht. Lageunterschiede und die "langwellige" Durchwölbung des Dias werden praktisch unterdrückt.

Ausgehend von der Tatsache, daß die Diapositive in der Regel mit der Schichtseite in der richtigen Richtung liegen, die z. B. durch unterschiedliche Farben der Rahmenteile angezeigt wird, kann sich das Verfahren darauf beschränken, falsch eingelegte Diapositive zu erkennen. Es genügt dann, wenn die Anzeigeeinrichtung 9 in Tätigkeit gesetzt wird, wenn durch die Auswertung der von den Abtastspitzen gelieferten Stromimpulse gezeigt wird, daß die Schichtseite auf der falschen Seiten des Rähmchens angeordnet ist.

Eine Vereinfachung könnte auch darin bestehen, nur ein einziges Abtastsystem zu verwenden, und zwar auf der Seite, wo in der Regellage die Schichtseite nicht ist. Durch die größere Rauhigkeit der Schichtseite an der Abtastvorrichtung, wo normalerweise keine Rauhigkeit auftritt, würde die akustisch verstärkte Rauhtiefenanzeige dann nur ansprechen, wenn die Schichtseite auf der falschen Seite liegt.

Nach Abschluß der Prüfung auf die richtige Lage der Schichtseite wird die Abhebevorrichtung für die Arme 3 wieder in Tätigkeit gesetzt, so daß der Rahmen 10 in eine Kopierposition weitergeschoben oder - falls die Schichtseite falsch liegt - zum Umdrehen entnommen werden kann.

## Patentansprüche

1. Verfahren zum Erkennen der Schichtseite von transparenten Bildvorlagen, insbesondere von unverglast gerahmten Bildvorlagen, dadurch gekennzeichnet, daß die Oberflächenstruktur der beiden Seiten der Bilvorlage mittels mindestens eines mechanischen Abtastsystems zumindest über eine in der Größenordnung der Bildabmessungen liegende Strecke abgetastet, die Bewegungen eines Abtasters (2) des Abtastsystems senkrecht zur abgetasteten Oberfläche durch ein induktives oder kapazitives (6, 11; 6′, 11′) System in Stromimpulse umgesetzt werden und über das Vorliegen einer Schicht- oder Rückseite aufgrund der häufigeren, stärkeren oder eine Schwelle überschreitenden Stromimpulse entschieden wird.

2. Verfahren nach Anspruch 1, dadurch gekennzeichnet, daß die beiden Seiten der Bildvorlage (1b) im jeweils gleichen Bereich durch gleichartige, gegenüberliegende Abtastsysteme abgetastet werden, die Signale unmittelbar verglichen und nach Durchlaufen der Abtaststrecke über die vermutliche Lage der Schichtseite entschieden wird.

3. Verfahren nach Anspruch 1 oder 2, dadurch gekennzeichnet, daß die Stromimpulse einer Seite hörbar gemacht werden.

4. Verfahren nach Anspruch 1 oder 2, dadurch gekennzeichnet, daß die aufgrund der Größe der Stromimpulse getroffene Entscheidung optisch oder akustisch angezeigt wird, wenn die Lage der Schichtseite von einer Regellage abweicht.

5. Verfahren nach einem der vorangehenden Ansprüche, dadurch gekennzeichnet, daß die Vorlagen nach Art eines akustischen Tonträgers abgetastet werden, wobei die Tastnadel verrundet und die Auflagekraft kleiner 5 mN gehalten wird.

6. Vorrichtung zur Durchführung des Verfahrens nach Anspruch 1, dadurch gekennzeichnet, daß beiderseits einer Führungsbahn (10) für die glaslos gerahmte Bildvorlage (1b) je ein Abtastsystem mit je einem Abtaster (2, 2′) vorgesehen ist, der mittels eines Gewichts (5, 5′) mit vorbestimmter Maximalkraft kleiner 5 mN an die Oberflächen der Bildverlage nachführbar andrückbar ist und die Abtaster innerhalb einer gerätefesten Spule (6, 6′) des jeweiligen Abtastsystems bewegbar sind.

7. Vorrichtung nach dem vorangehenden Anspruch, dadurch gekennzeichnet, daß die Abtastspitzen (2, 2′) der Abtaster - insbesondere Abtastdiamanten verrundet sind.

## Claims

1. Process for detecting the emulsion side of transparent image originals, in particular of unglazed, framed image originals, characterised in that the surface structure of both sides of the image original is scanned by means of at least one mechanical scanning system at least over a region lying within the magnitude of the dimensions of the image, the movements of a scanner (2) of the scanning system perpendicular to the scanned surface are converted by an inductive or capacitive system (6, 11; 6′, 11′) into current impulses and a decision is made regarding the presence of an emulsion side or a reverse side on the basis of the current impulses which are more frequent, stronger or which exceed a threshold.

2. Process according to Claim 1, characterised in that both sides of the image original (lb) are scanned, in the same zone in each case, by opposite scanning systems of similar type, the signals are compared directly and, after the region of scan has been covered, a decision is made regarding the presumed location of the emulsion side.

3. Process according to Claim 1 or 2, characterised in that the current impulses from one side are made audible.

4. Process according to Claim 1 or 2, characterised in that the decision made on the basis of the magnitude of the current impulses is indicated optically or acoustically when the location of the emulsion side differs from a regular location.

5. Process according to one of the preceding claims, characterised in that the originals are scanned in the manner of an acoustic sound-carrier, whereby the scanning needle is rounded and the contact force is kept to less than 5 mN.

6. Device for implementing the process according to Claim 1, characterised in that on each side of a guide path (10) for the unglazed, framed image original (lb) a scanning system is provided having, in each case, a scanner (2, 2′) which by means of a weight (5, 5′) of predetermined maximum force of less than 5 mN is capable of being pressed against the surfaces of the image original in trackable manner and the scanners are capable of moving within a coil (6, 6′) of the respective scanning system that is fixed with respect to the instrument.

7. Device according to the preceding claim, characterised in that the scanning tips (2, 2′) of the scanners - in particular scanning diamonds - are rounded.

## Revendications

1. Procédé pour la reconnaissance du côté de couche d'images transparentes, en particulier d'images encadrées, non pourvues de verre, caractérisé en ce que la structure de surface des deux côtés de l'image est explorée par palpation, au moyen d'au moins un système d'exploration par palpation mécanique, au moins sur une étendue se trouvant dans l'ordre de grandeur des dimensions d'image, que les mouvements d'un élément d'exploration par palpation (2) du système d'exploration par palpation, perpendiculaires à la surface à explorer par palpation, sont convertis, par un système inductif ou capacitif (6, 11 ; 6′, 11′), en des impulsions de courant, et en ce qu'il est décidé sur la présence d'un côté de couche ou d'un côté arrière, en raison des impulsions de courant plus fréquentes, plus fortes ou franchissant un seuil.

2. Procédé selon la revendication 1, caractérisé en ce que les deux côtés de l'image (lb) sont explorés par palpation, chaque fois, dans la même région, par des systèmes d'exploration par palpation du même type, se trouvant à l'opposé, qui comparent directement des signaux, et en ce qu'après avoir parcouru l'étendue d'exploration par palpation, il est décidé de la situation probable du côté de couche.

3. Procédé selon la revendication 1 ou la revendication 2, caractérisé en ce que les impulsions de courant d'un côté sont rendues audibles.

4. Procédé selon la revendication 1 ou la revendication 2, caractérisé en ce que la décision atteinte en raison de la grandeur des impulsions de courant est indiquée optiquement ou acoustiquement, lorsque la situation du côté de couche s'écarte d'une situation normale.

5. Procédé selon une des précédentes revendications, caractérisé en ce que les images sont explorées par palpation à la façon d'un support de son acoustique, l'aiguille de palpation étant arrondie et la force d'appui étant maintenue plus petite que 5 mN.

6. Dispositif pour la mise en oeuvre du procédé selon la revendication 1, caractérisé en ce que des deux côtés d'un chemin de guidage (10) pour l'image (1b) encadrée, sans verre, chaque fois, est prévu un système d'exploration par palpation comprenant, chaque fois, un élément d'exploration par palpation (2, 2′), qui, au moyen d'un poids (5, 5′) est susceptible d'être pressé, avec une force maximale prédéterminée plus petite que 5 mN, à la surface de l'image, susceptible d'être suivi, et en ce que les éléments d'exploration par palpation sont susceptibles d'être mus, chaque fois, à l'intérieur d'une bobine (6, 6′) fixe au dispositif du système d'exploration par palpation.

7. Procédé selon la précédente revendication, caractérisé en ce que les pointes d'exploration par palpation (2, 2′) des éléments d'exploration par palpation - en particulier des diamants d'exploration par palpation - sont arrondies.
